# EUROPÄISCHE PATENTSCHRIFT

(11) **EP 0 861 983 B1**
(45) Veröffentlichungstag und Bekanntmachung des Hinweises auf die Patenterteilung: **02.04.2003**
(21) Anmeldenummer: 97117640.9
(22) Anmeldetag: 11.10.1997
(51) Int. Cl.: F04D 29/28, F04D 29/02

(54) **Lüfterrad für ein Radialgebläse**
Fan rotor for a radial fan
Roue ventilateur pour un ventilateur radial

(30) Priorität: 26.02.1997 DE 19707571
(43) Veröffentlichungstag der Anmeldung: 02.09.1998
(73) Patentinhaber: Behr GmbH & Co., 70469 Stuttgart (DE)
(72) Erfinder: Links, Dagmar, Dipl.-Ing., 70197 Stuttgart (DE); Otto, Jürgen, Dipl.-Ing., 75428 Illingen (DE); Zerelles, Paul, Dipl.-Ing., 70180 Stuttgart (DE)

(56) Entgegenhaltungen:
- EP-A- 0 159 404
- DE-A- 2 939 385
- GB-A- 2 296 943
- US-A- 2 882 077
- US-A- 5 588 803

## Beschreibung

Die Erfindung betrifft ein Lüfterrad für Radialgebläse gemäß dem Oberbegriff des Patentanspruchs 1.

Aus der **DE-PS 29 39 385, GB 2 296 943** und der **US-PS 2,882,077** sind Lüfterräder für Radialgebläse bekannt, die eine Nabe und wenigstens einen aus Lüfterschaufeln bestehenden Lüfterkranz aufweisen, wobei der Lüfterkranz entweder über Speichen oder über ein schalenförmiges Zwischenstück mit der Nabe verbunden ist.

Für den Einsatz in Heizungs-, Lüftungs- oder Klimaanlagen von Kraftfahrzeugen kommen speichenlose Lüfterräder mit einem schalenförmigen Zwischenstück zum Einsatz, da diese Lüfterräder wegen ihrer Stabilität eine größere Laufruhe aufweisen und damit weniger Geräusch verursachen. Auch ist bei einem speichenlosen Lüfterrad die Luftführung verbessert, so daß der Wirkungsgrad eines ein derartiges Lüfterrad aufweisenden Gebläses erhöht ist, also das Gebläse mehr Luft fördern kann.

Derartige aus Kunststoff bestehende, speichenlose Laufräder werden im Spritzgußverfahren hergestellt. Dabei werden die Werkstücke zumeist aus einer einzigen Düse gespritzt. Beim Spritzen aus nur einer Düse befindet sich diese koaxial zur Rotationsachse des herzustellenden Lüfterrades, damit das Material sich gleichmäßig über die Spritzgußform verteilen kann. Beim Aushärten des Werkstücks und Lösen von der Spritzgußform bleibt eine Angußstange als Abfall übrig, die aus der Nabe mittels eines beim Spritzen der Düse gegenüberliegenden Kernstifts entfernt werden muß. Nachteilig ist, daß viel Abfall entsteht und der Kernstift während des Spritzprozesses schlecht zu temperieren ist.

Für Lüfterräder mit einem schalenförmigen, geschloßenen Zwischenstück ist es bekannt, was druckschriftlich nicht belegt ist, diese mit mehreren Anschnitten auf dem schalenförmigen Zwischenstück zu spritzen, wobei die Angußkegel im gleichen radialen Abstand von der Rotationsachse mit gleichen Winkelabständen angeordnet sind, um eine gleichmäßige Verteilung des Materials in der Spritzgußform zur Vermeidung von Unwuchten zu gewährleisten. Lüfterräder mit Speichen lassen sich mit diesem Spritzverfahren mit mehreren Anschnitten nicht mit der gewünschten Präzision bezüglich der Auswuchtung herstellen.

Das Spritzverfahren mit mehreren Anschnitten hat jedoch den Nachteil, daß bei der Herstellung von Lüfterrädern, beispielsweise in einem 3-Platten-Werkzeug, bei jedem gespritzen Lüfterrad eine sogenannte Angußspinne als Abfall übrig bleibt.

Heißkanaldüsen, bei denen ein derartiger Angußabfall nicht anfällt, sind nicht wirtschaftlich einsetzbar, da deren Düsenspitze der Form des schalenförmigen Zwischenstücks angepaßt sein müßte, oder die Düsen entsprechend der Formschräge des schalenförmigen Zwischenstücks schrägstehend in das Werkzeug eingebaut werden müßten.

Ausgehend von diesem Stand der Technik ist es Aufgabe der Erfindung, ein verbessertes, speichenloses Lüfterrad für Radialgebläse anzugeben, das weitgehend unwuchtfrei ist und bei dessen Herstellung die Angußabfälle möglichst vermeidbar sind und das konstengünstig herstellbar ist.

Diese Aufgabe wird gelöst durch ein Lüfterrad mit den Merkmalen des Anspruchs 1.

Wenn das schalenförmige Zwischenstück des erfindungsgemäßen Lüfterrades wenigstens einen Ansatz aufweist, mit zu einer Lüfterachse senkrechten Anspritzfläche, können in einfacher Weise die Spritzdüsen mit ihren Düsenspitzen senkrecht zur Anspritzfläche angeordnet werden, wobei ein möglichst kleiner Materialverteiler, der das Spritzmaterial von einer Maschinendüse zu den einzelnen Spritzdüsen verteilt, eingesetzt werden kann. Bei Einsatz eines kleinen Materialverteilers ist ein gleichmäßiger Materialfluß durch die einzelnen Spritzdüsen gewährleistet, so daß das spritzgegossene, erfindungsgemäße Lüfterrad weniger Unwuchten aufweist als bekannte Lüfterräder.

Insbesondere sind bekannte Heißkanaldüsen mit Standardspitzen einsetzbar, denn die Düsenspitzen brauchen aufgrund der ebenen Anspritzfläche keine spezielle, dem schalenförmigen Zwischenstück angepaßte Form aufweisen. Dadurch kann der bisher übliche Angußabfall vermieden werden.

In einer bevorzugten einfachen Ausführungsform ist der Ansatz rotationssymmetrisch und umfangsmäßig geschlossen, gemäß Anspruch 2. Diese Ausführungsform ist strömungstechnisch günstig, wenn das Lüfterrad Luft befördert.

Alternativ könnten gemäß Anspruch 3 umfangsmäßig mehrere Ansätze angeordnet sein.

In einer einfachen Ausgestaltung des erfindungsgemäßen Lüfterrades ist der Ansatz gebildet durch entsprechende Formgebung des Zwischenstücks. Entsprechend dem Abstand der Spritzdüsen von der Rotationsachse hat der Ansatz gemäß Anspruch 5 einen mittleren radialen Abstand von etwa einem Drittel des Lüfterradradius. Dadurch ergeben sich die vorgenannten Vorteile des Einsatzes von einem möglichst kleinen Materialverteiler mit einem ausreichenden Abstand der Spritzdüsen von der Rotationsachse zum Erhalt einer gleichförmigen Materialverteilung und einem ensprechend unwuchtfreien Lüfterrad..

Im folgenden wird die Erfindung anhand eines Ausführungsbeispiels unter Bezugnahme auf die Zeichnung im einzelnen erläutert.

In der Zeichnung zeigen:
- **Fig. 1**: einen Querschnitt des erfindungsgemäßen Lüfterrades;

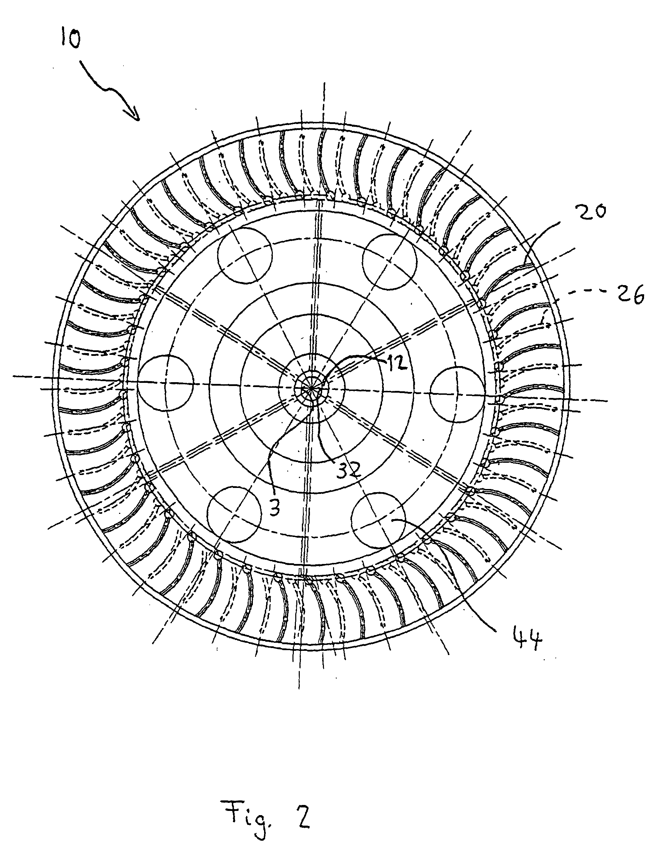

- **Fig. 2**: eine Draufsicht auf das Lüfterrad gemäß Fig. 1

Ein in der Zeichnung dargestelltes Lüfterrad 10, das als einteiliges Kunststoffteil im Spritzgußverfahren herstellbar ist, weist eine Nabe 12 und zwei Lüfterkränze 14, 16 auf. Die Nabe 12 ist mit den Lüfterkränzen 14, 16 durch ein im wesentlichen schalenförmig gestaltetes Zwischenstück 18 verbunden.

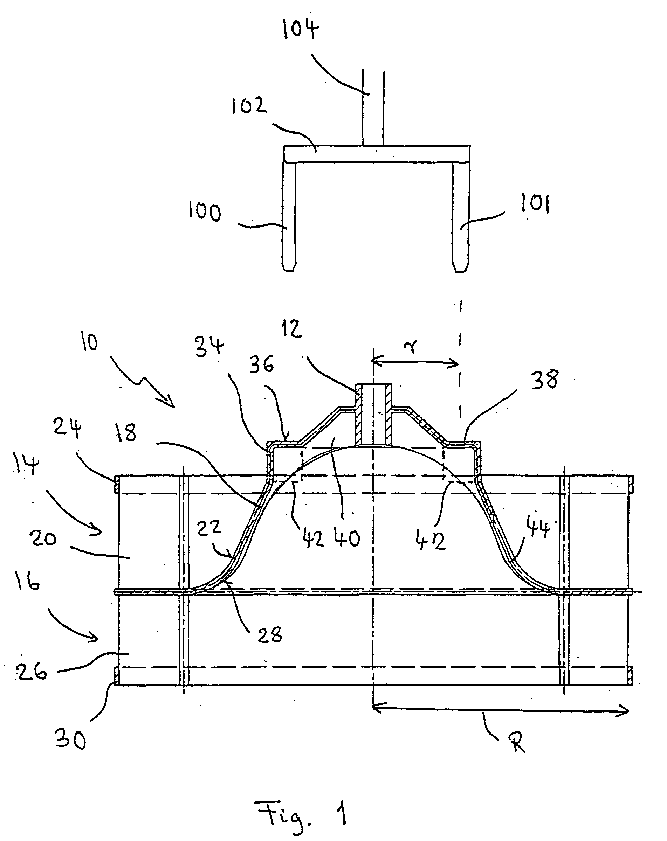

Der Lüfterkranz 14 besteht aus einzelnen, radial an dem Außenumfang endenden Lüfterschaufeln 20, die - in axialer Richtung gesehen - mit ihrem einen Ende auf einer (gemäß der Darstellung in Fig. 1) oberen Seite 22 des Zwischenstücks angebracht sind und an ihrem anderen Ende von einem kreisförmigen Ring 24 gehalten sind. In entsprechender Weise ist der Lüfterkranz 16 aus Lüfterschaufeln 26 aufgebaut, die an einer unteren (Fig. 1) Seite 28 des Zwischenstücks 18 angeordnet sind und über einen Ring 30 an ihrem - von der Nabe 12 in axialer Richtung gesehen - abgewandten Ende gehalten sind. Mit seiner Nabe 12 ist das Lüfterrad 10 mit einer nicht dargestellten Welle eines Gebläsemotors drehfest verbindbar. Die Drehfestigkeit wird durch Kraft- oder Formschluß der Nabe 12 mit der Welle bewirkt, wobei die Welle im Querschnitt wenigstens eine, bevorzugt zwei diametral angeordnete Abflachungen aufweist, die an ebenen Flächen 32 der Nabenöffnung zur Anlage gelangen. Durch Klemmringe oder dergleichen Befestigungsmittel ist das Lüfterrad auf der Welle axial gesichert.

Das im wesentlichen schalenförmige Zwischenstück 18 weist in einem Bereich zwischen der Nabe 12 und den Lüfterkränzen 14, 16 wenigstens einen Ansatz 34, mit einer ebenen und zur Lüfterachse senkrechten Anspritzfläche 36, auf. In dem Ausführungsbeispiel gemäß Fig. 1 ist der Ansatz 34 rotationssymmetrisch, so daß ein sich radial erstrekkender Ring 38 gebildet ist, dessen eine Seite die Anspritzfläche 36 bildet, die dann umfangsmäßig geschlossen ist. Der Ansatz 34 ist gebildet durch eine entsprechende Formgebung des Zwischenstücks 18, wobei zur Verbesserung der Stabilität sich radial von der Achse weg erstreckende Stege 40 vorgesehen sein können. Bevorzugt beträgt der mittlere Radius r des Ringes 38 etwa ein Drittel des Lüfterradradius R.

Anstatt eines rotationssymmetrischen und umfangsmäßig geschlossenen Ansatzes 34 sind in einer nicht dargestellten Ausführungsform mehrere umfangsmäßig angeordnete Ansätze mit ebenen Anspritzflächen vorgesehen.

In weiterer Ausgestaltung des erfindungsgemäßen Lüfterrades kann der Ansatz 34 anstatt, wie in Fig. 1 dargestellt, durch Ausformung des Zwischenstücks zu seiner Oberseite 22 hin auch zu seiner Unterseite 28 ausgeformt sein, wie dies durch strichlierte Linien 42 angedeutet ist.

Zur Gewichtsreduzierung oder auch aus Montagegründen kann das Zwischenstück 18 Durchbrechungen 44 aufweisen, die in Winkelabständen angeordnet sein können. Bevorzugt sind jedoch möglichst wenig und möglichst kleine Durchbrechungen vorgesehen.

Das erfindungsgemäße Lüfterrad ist mit dem nachfolgend beschriebenen Verfahren herstellbar:

Das Lüfterrad wird im Spritzgußverfahren hergestellt, wobei die Spritzgußmaschine wenigstens zwei, bevorzugt drei oder fünf Spritzdüsen 100, 101 aufweist, die außerhalb der Rotationsachse in jeweils gleichem radialen Abstand und in äquidistanten Winkelabständen angeordnet sind. Der Abstand der Spritzdüsen von der Achse beträgt r. Die Spritzdüsen 100 sind über einen Materialverteiler 102 mit einer Maschinendüse 104 verbunden. Aufgrund der ebenen Anspritzfläche sind bekannte Standardspritzdüsen einsetzbar. Bevorzugt kommen Heißkanaldüsen zum Einsatz, wodurch Angußabfall weitgehend vermeidbar ist.

Da das Lüfterrad 10 gemäß dem Ausführungsbeispiel zweiflutig ist, mit zwei Lüfterkränzen 14, 16, wird es in einem Dreiplatten-Werkzeug gespritzt. Zur Herstellung eines Lüfterrades mit einem Lüfterkranz würde ein Zweiplatten-Werkzeug genügen.

Es ist vorteilhaft, Düsen mit Kalottenansatz einzusetzen, so daß der Anguß in der Anspritzfläche 36 "versenkt" ist und der Angußbutzen nicht mehr aus der Anspritzfläche 36 herausragt.

Damit der Materialverteiler 102 möglichst klein gehalten werden kann, sollten die Spritzdüsen 100, 101 einen möglichst kleinen Abstand voneinander haben. Andererseits sollten die Spritzdüsen 100, 101 einen gewissen Abstand von der Rotationsachse haben, damit das Spritzgußmaterial gleichförmig in der Spritzgußform verteilt wird. Aus diesem Grunde beträgt der radiale Abstand r der Spritzdüsen von der Achse etwa ein Drittel des Radius R des Lüfterrades. Der Abstand der Spritzdüsen 100, 101 von der Achse entspricht dem mittleren Radius r des Ringes 38, so daß die Anspritzfläche 36 stets senkrecht zu den Spritzdüsen 100, 101 angeordnet ist.

Das Verfahren zur Herstellung des erfindungsgemäßen Lüfterrades zeichnet sich durch eine sehr hohe Prozeßkonstanz aus. Es tritt weniger Angußabfall auf und die hergestellten Lüfterräder sind erheblich exakter ausgewuchtet als bisher bekannte Lüfterräder.

## Patentansprüche

1. Lüfterrad für ein Radialgebläse mit einer Nabe (12) und wenigstens einem aus Lüfterschaufeln (20, 26) bestehenden Lüfterkranz (14, 16), der über ein schalenförmiges Zwischenstück (18) mit der Nabe (12) verbunden ist, **dadurch gekennzeichnet, daß** das schalenförmige Zwischenstück (18) wenigstens einen Ansatz (34) aufweist, mit einer zur Lüfterradachse senkrechten, ebenen Anspritzfläche (36).

2. Lüfterrad nach Anspruch 1, **dadurch gekennzeichnet, daß** der Ansatz (34) rotationssymmetrisch ist und einen sich radial erstreckenden Ring (38) bildet, so daß die Anspritzfläche (36) umfangsmäßig geschlossen ist.

3. Lüfterrad nach Anspruch 1, **dadurch gekennzeichnet, daß** mehrere umfangsmäßig angeordnete Ansätze vorgesehen sind.

4. Vorrichtung nach einem der vorhergehenden Ansprüche, **dadurch gekennzeichnet, daß** der Ansatz (34) gebildet ist durch eine entsprechende Formgebung des Zwischenstücks (18).

5. Lüfterrad nach einem der vorhergehenden Ansprüche, **dadurch gekennzeichnet, daß** der Ansatz (34) einen mittleren radialen Abstand (r) von der Rotationachse hat, der etwa einem Drittel des Lüfterradradius (R) entspricht.

## Claims

1. Fan wheel for a radial fan, with a hub (12) and at least one fan rim (14, 16), comprising ventilator blades (20, 26), that is connected to the hub (12) by means of a dish-form, intermediate piece (18), **characterized in that** the dish-form intermediate piece (18) has at least one shoulder (34) with a flat splash surface (36) that is vertically disposed in relation to the fan wheel axis.

2. Fan wheel in accordance with claim 1, **characterized in that** the shoulder (34) is rotationally symmetrical and forms a ring (38) that extends radially, such that the splash surface (36) is closed along its periphery.

3. Fan wheel in accordance with claim 1, **characterized in that** several peripherally arranged set-offs are provided.

4. Device in accordance with one of the preceding claims, **characterized in that** the shoulder (34) is formed by corresponding shaping of the intermediate piece (18).

5. Fan wheel in accordance with one of the preceding claims, **characterized in that** the shoulder (34) shows a central, radial gap (r) in relation to the axis of rotation that is corresponds to approximately a third of the fan wheel (R).

## Revendications

1. Roue de ventilateur radial comportant un moyeu (12) et au minimum une couronne (14, 16) composée d'aubes (20, 26), reliée au moyeu (12) par l'intermédiaire d'une pièce intercalaire (18) en forme de cuvette, **caractérisée en ce que** la pièce intercalaire (18) en forme de cuvette dispose au moins d'une carotte (34) avec une surface d'injection (36) plane et perpendiculaire à l'axe de la roue de ventilateur.

2. Roue de ventilateur selon la revendication 1 **caractérisée en ce que** la carotte (34) a une symétrie de révolution et constitue un anneau (38) s'étendant de manière radiale, la surface d'injection (36) étant ainsi fermée au niveau de sa circonférence.

3. Roue de ventilateur selon la revendication 1 **caractérisée en ce que** plusieurs carottes sont prévues, celles-ci étant disposées au niveau de la circonférence.

4. Dispositif selon l'une quelconque des revendications précédentes **caractérisé en ce que** la carotte (34) est formée par une configuration spécifique de la pièce intercalaire (18).

5. Roue de ventilateur selon l'une quelconque des revendications précédentes **caractérisée en ce que** la carotte (34) a une distance radiale (r) moyenne par rapport à l'axe de rotation correspondant approximativement à un tiers du rayon (R) de la roue de ventilateur.
